# EUROPEAN PATENT APPLICATION

(11) **EP 4 818 006 A1**
(43) Date of publication of application: **07.10.2026**
(21) Application number: 26161180.0
(22) Date of filing: 27.02.2026
(51) Int. Cl.: B62D 35/00, B62D 37/02, B62D 35/02

(54) **VEHICLE LOWER STRUCTURE**

(30) Priority: 31.03.2025 JP 2025059506
(71) Applicant: MAZDA MOTOR CORPORATION, Hiroshima 730-8670 (JP)
(72) Inventor: Katsuya, Miyamoto, Aki-gun, Hiroshima, 730-8670 (JP)
(74) Representative: Lorenz Seidler Gossel Part. mbB

(57) **Abstract**

[Problem]

To provide a vehicle lower structure capable of preventing damage to an undercover caused by interference with a road surface.

[Means for Solution]

A vehicle lower structure includes an undercover 4 that covers the bottom surface of a vehicle body 1 within a range on the front side of a pair of front wheels 2 and between the pair of front wheels 2. The undercover 4 includes a movable panel 11, a fixed frame 12, and a deformable member 13, the movable panel 11 being movable in an up-down direction, the fixed frame 12 being disposed above the movable panel 11, and being fixed to the bottom surface of the vehicle body 1, the deformable member 13 being deformable and coupling at least a front end portion 11c of the movable panel 11 to the fixed frame 12. The deformable member 13 is made of a material softer than the material of the movable panel 11, and is deformed when the movable panel 11 interferes with the road surface. The deformable member 12 includes a front portion 13a, and a pair of side portions 13b extending toward the vehicle rear side from both end portions of the front portion 13a. Corner portions 13c are formed by the front portion 13a and the side portions 13b of the deformable member 13, and each corner portion 13c has a recess 14 that is recessed toward the inner side of the corner portion 13c.

## Description

### [Technical Field]

The present invention relates to a vehicle lower structure.

### [Background Art]

Conventionally, various vehicle lower structures have been proposed that include a member, such as an undercover, on the lower side of a front portion of a vehicle body to control an airflow flowing through an area below the vehicle body during traveling of the vehicle.

Patent Literature 1, for example, discloses a vehicle including an undercover that is lowered during high-speed traveling of the vehicle. In this vehicle, negative pressure at the bottom part of a vehicle body is increased by the bottom surface of the undercover, which is lowered during high-speed traveling, thereby increasing suction of the vehicle body to the road to enhance stability during high-speed traveling.

Patent Literature 2 discloses a vehicle including movable tire covers that are lowered in front of tires during high-speed traveling of the vehicle. This movable tire covers prevent air from impinging on the tires during high-speed traveling.

### [Citation List]

### [Patent Literature]

[Patent Literature 1] Japanese Patent Laid-Open No. 2023-10984
[Patent Literature 2] Japanese Patent Laid-Open No. 2007-30549

### [Summary of Invention]

### [Problems to be Solved by the Invention]

In each of the above-mentioned two structures, there is a possibility that when the vehicle encounters an obstacle, such as a block protruding from a road surface, or a large stepped portion during traveling with a member, such as the undercover, that is provided on the lower side of the front portion of the vehicle body being lowered to a lower position close to the road surface, the undercover may interfere with the obstacle or the stepped portion. In such a case, there is a concern that the undercover may be damaged due to interference with the obstacle or the stepped portion on the road surface.

Particularly, corner portions at both ends of the front portion of the undercover (that is, the corner portions formed by the front portion and the side portions of the undercover) receive the largest load during a collision with the road surface, and therefore damage to the corner portions is a particular problem.

The present invention has been made under the above-mentioned circumstances, and it is an object of the present invention to provide a vehicle lower structure that is capable of preventing damage to an undercover caused by interference with the road surface.

### [Means for Solving the Problems]

To solve the above-mentioned problem, a vehicle lower structure of the present invention includes an undercover that is configured to cover a bottom surface of a vehicle body of a vehicle within a range on a front side of a pair of front wheels and between the pair of front wheels, the vehicle lower structure being characterized in that the undercover includes a movable panel, a fixed frame, and a deformable member, the movable panel being movable in an up-down direction, i.e. in the vehicle height direction, the fixed frame being disposed, in a vehicle height direction, above the movable panel, and being fixed to the bottom surface of the vehicle body, the deformable member being deformable and coupling the movable panel to the fixed frame, the deformable member is made of a material softer than a material of the movable panel, and is deformed when the movable panel interferes with a road surface, the deformable member includes a front portion and a pair of side portions, the front portion extending in a vehicle width direction on a front side of the undercover, the pair of side portions extending toward a vehicle rear side from both end portions of the front portion, and corner portions are formed by the front portion and the pair of side portions of the deformable member, and a corner portion of the corner portions has a recess that is recessed toward an inner side of the corner portion.

With such a configuration, although the movable panel is lifted when the movable panel interferes with the road surface, at this point, at the corner portions, which are located at both ends of the front portion of the deformable member, the deformable member is smoothly deformed by being bent toward the inner side of the corner portions, with the recesses serving as bending starting points and hence, the movable panel can be easily lifted with a small load. Thus, it is possible to reliably reduce rigidity of the corner portions at both ends of the front end portion of the undercover, which receive the largest load when interference with the road surface occurs. As a result, it is possible to prevent damage to the undercover when interference with the road surface occurs.

In the above-mentioned vehicle lower structure, it is preferable that the recess include a horizontal portion and a vertical wall, the horizontal portion extending horizontally toward the vehicle rear side and toward the inner side of the corner portion, the vertical wall extending toward a vehicle lower side from an end portion of the horizontal portion on a side toward the inner side of the corner portion, of end portions of the horizontal portion.

With such a configuration, when the movable panel interferes with the road surface, at each recess at the corner portion of the deformable member, the horizontal portion and the vertical wall, which form the recess, are smoothly folded with the elevation of the movable panel. With such folding, the deformable member is more smoothly deformed toward the inner side of the corner portion, thereby enhancing an effect of preventing damage to the undercover.

In the above-mentioned vehicle lower structure, it is preferable that the recess further includes a first inclined surface extending from the fixed frame to the horizontal portion, and a second inclined surface extending from the vertical wall to the movable panel. With such a configuration, the first and second inclined surfaces provide a smooth transition between the fixed frame, the recess structure, and the movable panel.

Further, the horizontal portion of the recess extends toward the vehicle rear side and hence, the horizontal portion can straighten traveling air during traveling of the vehicle, thereby suppressing generation of turbulence at the recess.

As a result, it is possible to enhance both the bendability of the corner portions of the deformable member and aerodynamic performance.

In the above-mentioned vehicle lower structure, it is preferable that, of the end portions of the horizontal portion, the end portion on the side toward the inner side of the corner portion be formed to have a curved surface having a larger radius of curvature than a curved surface of an end portion on a side toward an outer side of the corner portion.

With such a configuration, the area of the horizontal portion can be increased, leading to enlargement of a portion that extends toward the vehicle rear side, thereby facilitating smooth airflow toward the rear side. As a result, aerodynamic performance is further enhanced.

In the above-mentioned vehicle lower structure, it is preferable that the horizontal portion have a triangular shape when viewed from a bottom, and as components that form the triangular shape, the horizontal portion include a pair of oblique side portions and a bottom side portion, the pair of oblique side portions extending toward the vehicle rear side and toward a vehicle-width-direction inner side to form an obtuse angle portion, the bottom side portion extending in a direction toward a vehicle-width-direction outer side as the bottom side portion extends toward the vehicle rear side.

With such a configuration, the horizontal portion of the recess has the above-mentioned triangular shape, thus having a simple shape. Therefore, it is possible to easily manufacture an undercover that enhances both the bendability of the corner portions of the deformable member and aerodynamic performance, thereby enhancing the productivity of the undercover.

In the above-mentioned vehicle lower structure, it is preferable that the obtuse angle portion has an angle larger than 90 degrees. With such a configuration, the triangular shape of the horizontal portion is widened at its forward-most point.

In the above-mentioned vehicle lower structure, it is preferable that the deformable member is made of elastomer and the movable panel is made of polypropylene. With such a configuration, the deformable member is made of elastomer, and thus is sufficiently softer than and has higher deformability than the movable panel made of polypropylene. Therefore, when the movable panel interferes with the road surface, the deformable member is significantly deformed with a small load, thereby allowing the movable panel to quickly and smoothly move upward. Further preferable, the undercover is integrally formed by two-color molding.

In the above-mentioned vehicle lower structure, it is preferable that a rear end portion of the movable panel is fixed to the fixed frame, such that the movable panel is supported in a cantilever state. With such a configuration, the movable panel is supported on the fixed frame only at the rear end portion and hence, when interference with the road surface occurs, the front end portion of the movable panel can significantly swing in the up-down direction. As a result, it is possible to reliably prevent damage to the undercover.

In the above-mentioned vehicle lower structure, it is preferable that the deformable member is disposed along a front end portion and side end portions of the movable panel, excluding the rear end portion. With such a configuration, the front end portion and both side end portions are flexibly coupled to the fixed frame via the deformable member, while the rear end portion provides a stable pivot point.

In the above-mentioned vehicle lower structure, it is preferable that the movable panel includes a flat bottom portion and a front inclined surface that is inclined upward as the front inclined surface extends toward a vehicle front side. With such a configuration, the flat bottom portion can be disposed at a height close to the road surface, which facilitates airflow and reduces air resistance.

In the above-mentioned vehicle lower structure, it is preferable that a length of the deformable member in a cross-section taken along a front-rear direction at the front portion of the undercover is longer than a length of the deformable member in a cross-section taken along the vehicle width direction at a side portion of the undercover. With such a configuration, the swing range in the up-down direction of the front end portion of the movable panel is increased.

Another aspect of the invention is directed to a vehicle comprising the vehicle lower structure according to the above described invention. In a preferred aspect of the vehicle, the fixed frame of the vehicle lower structure is fixed to a bumper and a suspension cross member of the vehicle body of the vehicle. With such a configuration, the fixed frame is anchored to strong, structural components of the vehicle. This provides a highly stable and rigid foundation for the entire undercover assembly, ensuring it can withstand the forces exerted during an impact without becoming detached from the vehicle body.[Advantageous Effects of Invention]

As described above, according to the vehicle lower structure of the present invention, it is possible to prevent damage to the undercover caused by interference with the road surface.

### [Brief Description of Drawings]

FIG. 1 is a perspective view showing a main part of a vehicle lower structure according to an embodiment of the present invention, with an undercover and an area around the undercover viewed obliquely from the lower front-left side.
FIG. 2 is an enlarged perspective view of the undercover shown in FIG. 1, as viewed from the lower front-right side.
FIG. 3 is a bottom view of the left part of the undercover shown in FIG. 1.
FIG. 4 is a side view of the front portion of the left side surface of the undercover shown in FIG. 1.
FIG. 5 is a perspective view of the right half of the undercover shown in FIG. 1, as viewed obliquely from the right bottom.
FIG. 6 is a bottom view of a recess formed at a corner portion of a deformable member shown in FIG. 3, and an area around the recess.
FIG. 7 is a cross-sectional view taken along line VII-VII in FIG. 6.
FIG. 8 is an enlarged perspective view of the recess shown in FIG. 6 and the area around the recess, as viewed from the rear bottom and the vehicle-width-direction inner side.
FIG. 9 is a cross-sectional view taken along line IX-IX in FIG. 5.
FIG. 10 is a cross-sectional view taken along line X-X in FIG. 5.
FIG. 11 is a front view of the front left half of a vehicle body shown in FIG. 1.
FIG. 12 is a cross-sectional view taken along line XII-XII in FIG. 5.

### [Mode for carrying out the Invention]

Hereinafter, a vehicle lower structure according to an embodiment of the present invention will be described in detail with reference to drawings.

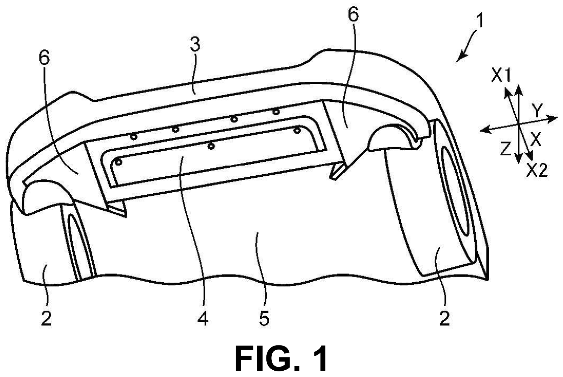

FIG. 1 discloses, as an embodiment of a vehicle lower structure of the present invention, a vehicle lower structure that includes an undercover 4.

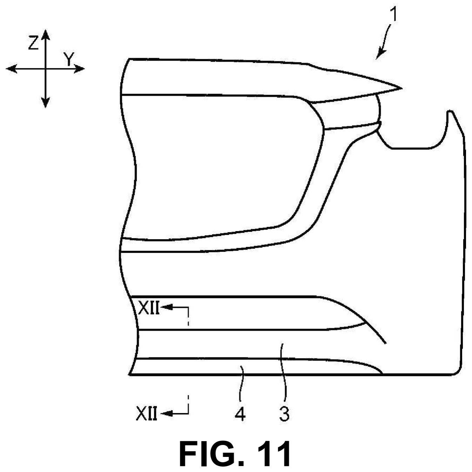

To be more specific, the vehicle lower structure shown in FIG. 1 includes the undercover 4 that covers the bottom surface of a vehicle body 1 within a range on a front side X1 of a pair of front wheels 2 and between the pair of front wheels 2, the undercover 4 being movable in an up-down direction Z. As shown in FIG. 1 and FIGS. 11, 12, the undercover 4 is disposed on the bottom surface of the vehicle body 1 in the range from the vicinity of the front end of a bumper 3 to the front ends of the front wheels 2.

In the vehicle lower structure of the present embodiment, as shown in FIG. 1, a floor panel 5 that covers the bottom surface of the vehicle body 1 is disposed on a side of the undercover 4 toward a vehicle rear side X2. In addition, a pair of side undercovers 6 are disposed on both sides of the undercover 4 in a vehicle width direction Y. In the present invention, the floor panel 5 and the side undercovers 6 are not essential constitutional elements, and may be replaced with other members.

Hereinafter, the specific structure of the undercover 4 will be described in more detail.

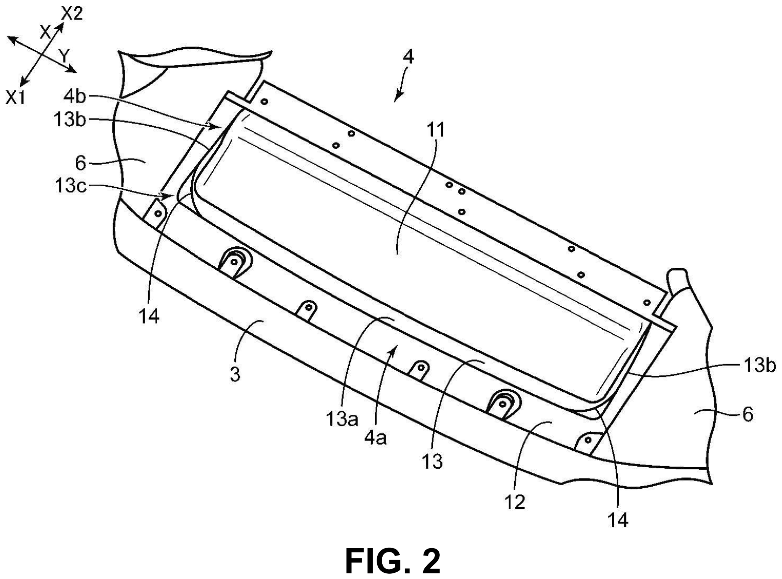

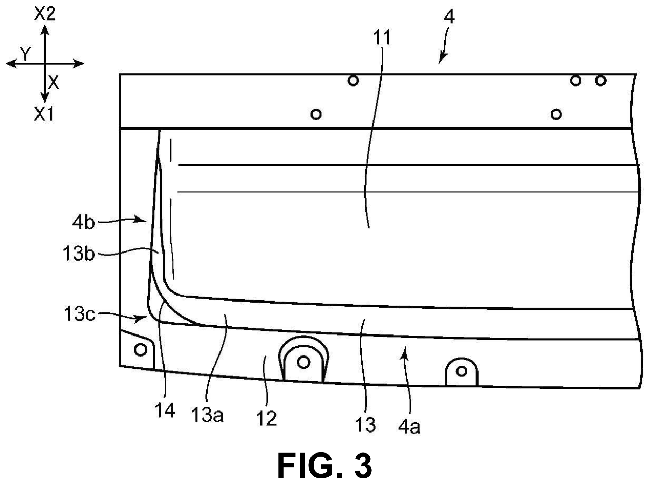

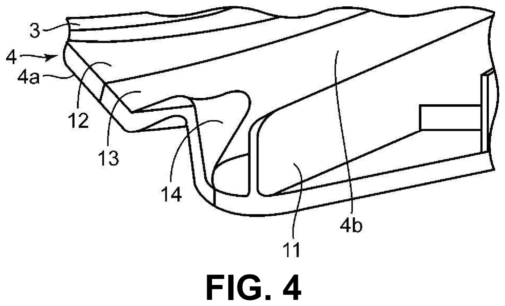

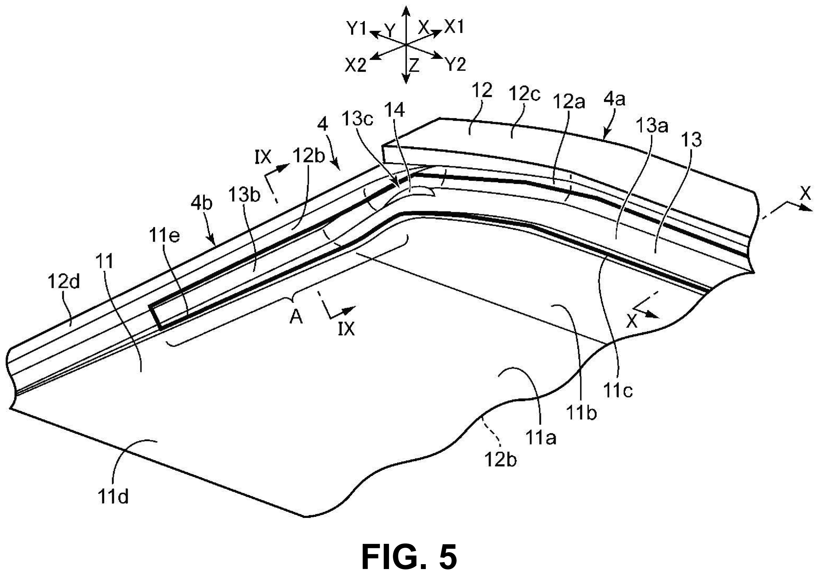

As shown in FIGS. 2 to 12, the undercover 4 includes a movable panel 11, a fixed frame 12, and a deformable member 13, the movable panel 11 being movable in the up-down direction Z, the fixed frame 12 being disposed above the movable panel 11, and being fixed to the bottom surface of the vehicle body 1, the deformable member 13 being deformable and coupling at least a front end portion 11c of the movable panel 11 (in the present embodiment, the front end portion 11c and side end portions 11e on both sides within a range A, excluding a rear end portion 11d (see FIG. 5)) to the fixed frame 12.

First, the description will be made for the deformable member 13 having recesses 14 that are main features of the vehicle lower structure of the present embodiment.

### (Description of deformable member 13)

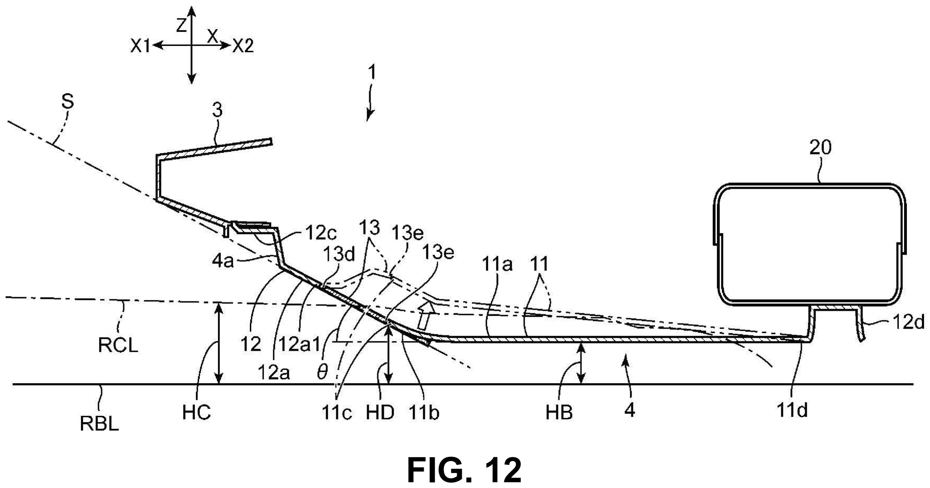

The deformable member 13 is made of a material softer than the material of the movable panel 11, and is made of, for example, a resin material that is more easily deformed than polypropylene, such as elastomer. The deformable member 13 is configured such that, when the movable panel 11 interferes with the road surface, the deformable member 13 is deformed as shown in FIG. 12, thereby allowing the movable panel 11 to move upward. To be more specific, the deformable member 13 is formed of a film-like body that is easily deformed, and that is made of elastomer.

The deformable member 13 is formed of a soft film-like body, thus coupling the movable panel 11 to the fixed frame 12, and closing a gap between the movable panel 11 and the fixed frame 12 to prevent intrusion of air or water into the undercover 4.

In the present embodiment, as shown in FIGS. 2 to 8, the deformable member 13 formed of a film-like body has the recesses 14 at both end portions of a front portion 4a of the undercover 4 in the vehicle width direction Y, the recesses 14 serving as starting points of deformation of the deformable member 13.

To be more specific, as shown in FIGS. 2 to 8, the deformable member 13 has a front portion 13a and a pair of side portions 13b, the front portion 13a extending in the vehicle width direction Y on the front side of the undercover 4, the pair of side portions 13b extending toward the vehicle rear side X2 from both end portions of the front portion 13a.

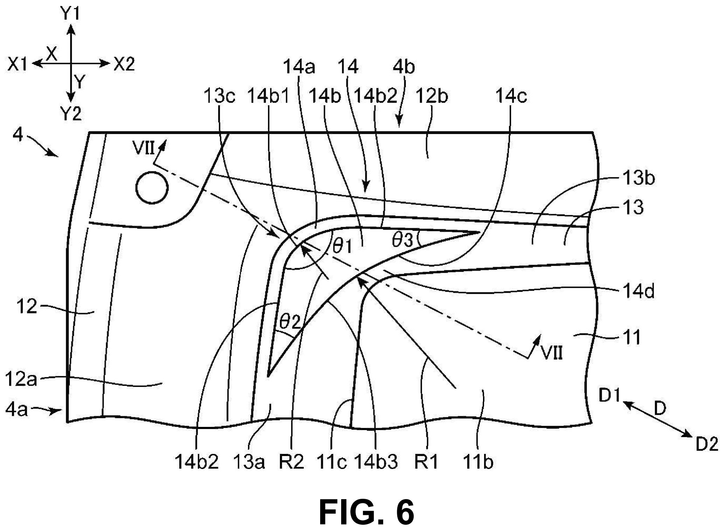

The corner portions 13c are formed by the front portion 13a and the side portions 13b of the deformable member 13, and each corner portion 13c has the recess 14 that is recessed toward an inner side D2 of the corner portion 13c (see FIG. 6).

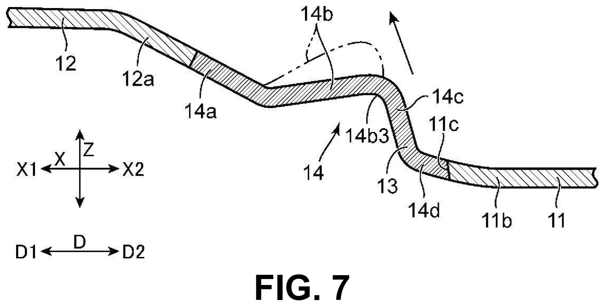

As shown in FIGS. 6 to 8 (particularly in FIG. 7), the recess 14 includes a first inclined surface 14a, a horizontal portion 14b, a vertical wall 14c, and a second inclined surface 14d, the horizontal portion 14b extending horizontally from the lower end of the first inclined surface 14a toward the vehicle rear side X2 and toward the inner side D2 of the corner portion 13c, the vertical wall 14c extending toward the vehicle lower side from a bottom side portion 14b3, which is an end portion of the horizontal portion 14b on a side toward the inner side D2 of the corner portion 13c, of the end portions of the horizontal portion 14b, the second inclined surface 14d extending toward the vehicle lower side and toward the vehicle rear side X2 from the lower end of the vertical wall 14c.

As shown in FIG. 7, the first inclined surface 14a and the second inclined surface 14d are inclined in a direction toward the lower side as the first inclined surface 14a and the second inclined surface 14d extend toward the vehicle rear side X2 and toward the inner side D2 of the corner portion 13c. The upper end of the first inclined surface 14a on a side toward the front side X1 is joined to a front portion 12a of the fixed frame 12. The rear end of the second inclined surface 14d is joined to the front end portion 11c of the movable panel 11 (that is, the front end of a front inclined surface 11b).

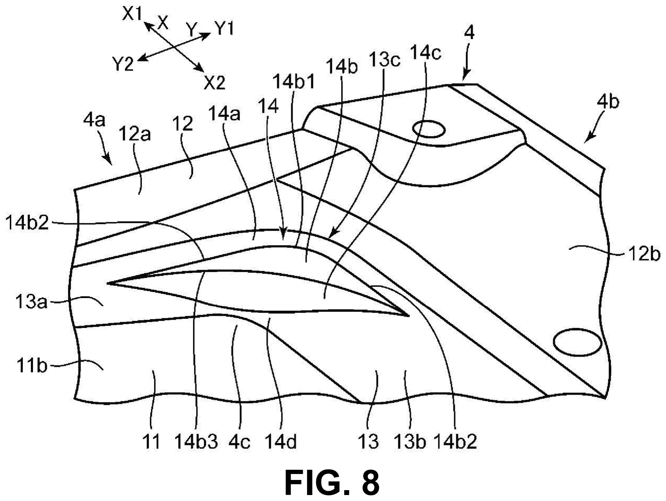

As shown in FIG. 6 and FIG. 8, the horizontal portion 14b has a triangular shape, when viewed from the bottom. As components that form a triangular shape, the horizontal portion 14b includes a pair of oblique side portions 14b2 and the bottom side portion 14b3, the pair of oblique side portions 14b2 extending toward the vehicle rear side X2 and toward the inner side in the vehicle width direction Y to form an obtuse angle portion 14b1, the bottom side portion 14b3 extending in a direction Y1 toward the outer side in the vehicle width direction Y as the bottom side portion 14b3 extends toward the vehicle rear side X2. As can be clearly understood from FIG. 6, this bottom side portion 14b3 forms the end portion of the horizontal portion 14b on the side toward the inner side D2 of the corner portion 13c, of the end portions of the horizontal portion 14b. The obtuse angle portion 14b1 has an angle θ1 larger than 90 degrees, and is larger than angles θ2, θ3, which are formed between the pair of oblique side portions 14b2 and the bottom side portion 14b3.

A larger area of the horizontal portion 14b increases the depth (the depth toward the inner side D2 of the corner portion 13c) of the recess 14, thereby further facilitating deformation of the corner portion 13c, and is therefore preferable. To increase the area of the horizontal portion 14b, it is preferable that the pair of oblique side portions 14b2, which form the triangular shape of the horizontal portion 14b, extend at positions as close as possible to and parallel to boundary lines between the fixed frame 12 and the deformable member 13 (that is, the boundary line between the front portions 12a, 13a and the boundary line between side portions 12b, 13b). In addition, a longer length of the oblique side portions 14b2, extending toward the vehicle rear side X2, enhances the bendability of the corner portions 13c and aerodynamic performance, and is therefore preferable.

As shown in FIG. 6, the bottom side portion 14b3 is formed to have a gently curved surface in order to cause traveling air to easily flow toward the rear side X2 during traveling of the vehicle, the bottom side portion 14b3 being the end portion of the horizontal portion 14b on the side toward the inner side D2 of the corner portion 13c, of the end portions of the horizontal portion 14b. To be more specific, the bottom side portion 14b3 is formed to have a curved surface (radius of curvature R2 (>R1)) having a larger radius of curvature than the curved surface of the obtuse angle portion 14b1 (radius of curvature R1) at the end portion on the side toward the outer side D1 of the corner portion 13c.

The deformable member 13 is disposed along the entire front end portion 11c of the movable panel 11 (within a range over the entire length in the vehicle width direction Y) and along the side end portions 11e on both sides in the vehicle width direction Y within the range A, excluding the rear end portion 11d.

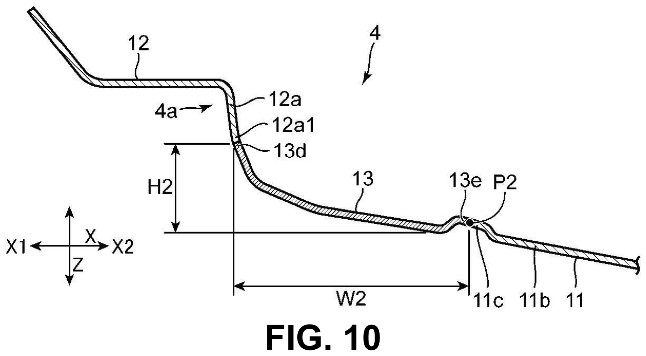

More specifically, at the front portion 4a of the undercover 4, as shown in FIG. 5, FIG. 10, and FIG. 12, a front end portion 13d of the deformable member 13 is joined to a rear end portion 12a1 of the front portion 12a of the fixed frame 12. A rear end portion 13e of the deformable member 13 is joined to the front end portion 11c of the movable panel 11. When the front end portion 11c of the movable panel 11 is a flat surface, the deformable member 13 made of elastomer can be easily joined. Accordingly, it is preferable that the front end portion 11c of the movable panel 11 be a flat surface. A joining position P2 shown in FIG. 10 between the rear end portion 13e of the deformable member 13 and the front end portion 11c of the movable panel 11 is disposed at a position slightly above (approximately 5 mm above) the front inclined surface 11b of the movable panel 11 and hence, there is no concern of the joining position P2 interfering with the road surface (or a slope S described later), and the front inclined surface 11b interferes with the road surface before the joining position P2 interferes with the road surface.

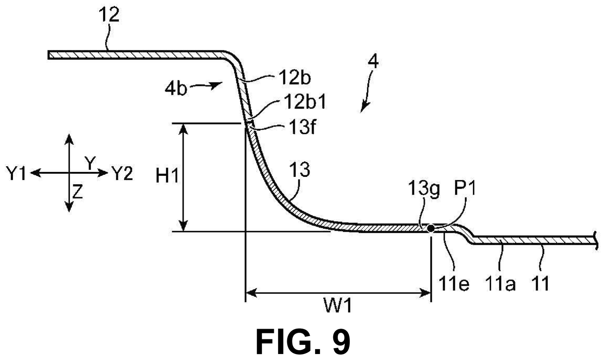

At a side portion 4b of the undercover 4, as shown in FIG. 5 and FIG. 9, an end portion 13f of the deformable member 13 on the vehicle-width-direction outer side Y1 is joined to a lower end portion 12b1 of the side portion 12b of the fixed frame 12. An end portion 13g of the deformable member 13 on a vehicle-width-direction inner side Y2 is joined to the side end portion 11e of the movable panel 11. A joining position P1 shown in FIG. 9 between the end portion 13g of the deformable member 13 and the side end portion 11e of the movable panel 11 is disposed at a position slightly above (approximately 5 mm above) a bottom portion 11a of the movable panel 11 and hence, there is no concern of the joining position P1 interfering with the road surface (or the slope S described later), and the bottom portion 11a interferes with the road surface before the joining position P1 interferes with the road surface.

When the front end portion 11c and the side end portions 11e of the above-mentioned movable panel 11 are flat surfaces, the deformable member 13 can be easily joined, the deformable member 13 being made of elastomer, which is a material different from the material of the front end portion 11c and the side end portions 11e of the movable panel 11. Accordingly, it is preferable that the front end portion 11c and the side end portions 11e of the movable panel 11 be flat surfaces.

As shown in the above-mentioned FIGS. 9 and 10, the deformable member 13 couples the movable panel 11 to the fixed frame 12 with a length that provides slight slack as a margin, so that the deformable member 13 does not prevent the movement of the movable panel 11 in the up-down direction Z.

### (Description of movable panel 11 and fixed frame 12)

Next, the movable panel 11 and the fixed frame 12 will be described. The shapes and the structures of the movable panel 11 and the fixed frame 12 are not particularly limited in the present invention, and various modifications are conceivable.

As shown in FIG. 5 and FIG. 12, the movable panel 11 includes the bottom portion 11a and the front inclined surface 11b, the bottom portion 11a being flat, the front inclined surface 11b being inclined upward as the front inclined surface 11b extends toward the vehicle front side X1 from the front end of the bottom portion 11a. The front end portion 11c of the movable panel 11 and the side end portions 11e on both sides in the vehicle width direction Y within the range A (see FIG. 5), excluding the rear end portion 11d, are spaced apart from the fixed frame 12. In contrast, the rear end portion 11d of the movable panel 11 is fixed to the fixed frame 12 (to be more specific, a rear fixed part 12d). Accordingly, the movable panel 11 is partially supported on the fixed frame 12 at the above-mentioned rear end portion 11d in a cantilever state.

As shown in FIG. 5 and FIG. 12, the fixed frame 12 is a frame body that is fixed to the bottom surface of the vehicle body 1. The fixed frame 12 includes the front portion 12a, the pair of side portions 12b, a front fixed part 12c, and the rear fixed part 12d, the pair of side portions 12b extending toward the rear side X2 from both ends of the front portion 12a in the vehicle width direction Y, the front fixed part 12c being fixed to the bottom surface of the bumper 3 of the vehicle body 1, the rear fixed part 12d being fixed to a suspension cross member 20 of the vehicle body 1 (a cross member being located on a side of the bumper 3 toward the rear side X2, and extending in the vehicle width direction Y). The front portion 12a is inclined at an inclination angle substantially equal to that of the above-mentioned front inclined surface 11b in a direction toward the upper side as the front portion 12a extends toward the front side X1.

The movable panel 11 and the fixed frame 12 are manufactured from a resin material, a metal material, or the like that is less likely to be deformed than the above-mentioned deformable member 13. For example, a resin material that is less likely to be deformed, such as polypropylene, is used for the movable panel 11 and the fixed frame 12. The movable panel 11 has bending rigidity to an extent that allows the movable panel 11 to be elastically deformed and swung in the up-down direction Z.

Next, the arrangement, the dimension, and the like of the undercover 4 will be described with reference to FIG. 12. In the present embodiment, a normal traveling surface RBL for the vehicle is set as a normal road surface, and a road surface interference line RCL that is at a predetermined height HC from the traveling surface RBL is set as the height of an obstacle, a stepped portion, or the like on the road surface.

The height HC of the road surface interference line RCL is set by taking into account the type of vehicle (normal passenger car, SUV, or the like) and the expected traveling environment, and is set to approximately 100 to 130 mm, for example.

A height HB of the bottom portion 11a of the movable panel 11 from the traveling surface RBL is set to a height that prevents the bottom portion 11a of the movable panel 11 from impinging on the traveling surface RBL during normal traveling, and that is lower than the height HC of the road surface interference line RCL. It is preferable that this height HB be a height that allows negative pressure to be decreased on a side of the bottom portion 11a toward the rear side X2 during traveling of the vehicle.

A higher height HD of the front end portion 11c of the movable panel 11 reliably allows only the movable panel 11 to interfere with the road surface (prevents the deformable member 13 from interfering with the road surface), and is therefore preferable. It is preferable that the height HD of the front end portion 11c of the movable panel 11 be higher than the height HC of the road surface interference line RCL, if possible.

An inclination angle θ of the front portion 4a of the undercover 4 (to be more specific, the front inclined surface 11b of the movable panel 11 and the front portion 12a of the fixed frame 12) with respect to the traveling surface RBL is set to be larger than an angle of an inclined surface expected under normal use conditions of the vehicle, for example, the slope S expected during traveling on a general inclined road or during off-road traveling (that is, an inclined surface assumed based on a line connecting a ground contact point of the front wheels 2 and the front end of the bumper 3 when the vehicle vigorously climbs or descends a bank during off-road traveling).

To prevent interference with the above-mentioned slope S, at the front portion 4a of the undercover 4, it is preferable to set a width H2 of the deformable member 13 in the up-down direction Z shown in FIG. 10 to a small value, and to set a width W2 of the deformable member 13 in a front-rear direction X to a large value.

To increase the swing range in the up-down direction Z of the above-mentioned movable panel 11, which is supported on the fixed frame 12 in a cantilever state, as shown in FIG. 9 and 10, it is preferable that the length of the deformable member 13 in cross section taken along the front-rear direction at the front portion 4a of the undercover 4 (that is, the length of the entire part extending in a curved shape from the front end portion 13d to the rear end portion 13e) be longer than the length of the deformable member 13 in cross section taken along the vehicle width direction at the side portion 4b of the undercover 4 (that is, the length of the entire part extending in a curved shape from the end portion 13f on the vehicle-width-direction outer side to the end portion 13g on the vehicle-width-direction inner side).

As shown in FIG. 10 and FIG. 12, in a case in which the front end portion 11c of the movable panel 11 moves upward beyond the front end portion 13d of the deformable member 13 when the front end portion 11c of the movable panel 11 moves upward between the front end portion 11c of the movable panel 11 and the fixed frame 12, the deformable member 13 may be pulled, and thereby broken. Accordingly, to avoid the breakage, it is preferable that the deformable member 13 extend to have a length equal to or less than the height of the front end portion 13d of the deformable member 13 when the front end portion 11c of the movable panel 11 moves upward. Accordingly, it is preferable that the horizontal length W2 (the length in the front-rear direction X) of the deformable member 13 at the front portion 4a of the undercover 4 shown in FIG. 10 be sufficiently longer than a horizontal length W1 (the length in the vehicle width direction Y) of the deformable member 13 at the side portion 4b of the undercover 4 shown in FIG. 9.

As described above, when the movable panel 11 and the fixed frame 12 are made of a resin material, such as polypropylene, and the deformable member 13 is formed of a film body made of a resin material, such as elastomer, the undercover 4 may be integrally formed by two-color molding using two kinds of resin material, that is, polypropylene and elastomer.

### (Feature of the present embodiment)

(1) The vehicle lower structure of the present embodiment includes the undercover 4 that covers the bottom surface of the vehicle body within the range on the front side X1 of the pair of front wheels 2 and between the pair of front wheels 2. The undercover 4 includes the movable panel 11, the fixed frame 12, and the deformable member 13, the movable panel 11 being movable in the up-down direction Z, the fixed frame 12 being disposed above the movable panel 11, and being fixed to the bottom surface of the vehicle body 1, the deformable member 13 being deformable and coupling at least the front end portion 11c of the movable panel 11 to the fixed frame 12. The deformable member 13 is made of a material softer than the material of the movable panel 11, and is deformed when the movable panel 11 interferes with the road surface.

As shown in FIGS. 2 to 8, the deformable member 13 includes the front portion 13a and the pair of side portions 13b, the front portion 13a extending in the vehicle width direction Y on the front side of the undercover 4, the pair of side portions 13b extending toward the vehicle rear side X2 from both end portions of the front portion 13a.

The corner portions 13c are formed by the front portion 13a and the side portions 13b of the deformable member 13, and each corner portion 13c has the recess 14 that is recessed toward the inner side D2 of the corner portion 13c.

With such a configuration, although the movable panel 11 is lifted when the movable panel 11 interferes with the road surface, at this point, at the corner portions 13c, which are located at both ends of the front portion 13a of the deformable member 13, the deformable member 13 is smoothly deformed by being bent toward the inner side D2 of the corner portions 13c, with the recesses 14 serving as bending starting points and hence, the movable panel 11 can be easily lifted with a small load. Thus, it is possible to reliably reduce the rigidity of the corner portions 13c at both ends of the front end portion of the undercover 4, which receive the largest load when interference with the road surface occurs. As a result, it is possible to prevent damage to the undercover 4 when interference with the road surface occurs.

The deformable member 13 has a shape of a film body having the recesses 14, thereby allowing the deformable member 13 to be formed with a constant thickness. Thus, it is possible to ensure productivity of the undercover 4. In addition, the deformable member 13 has the shape of the film body having the recesses 14 but no through holes, thereby achieving high sealability and hence, it is possible to prevent intrusion of water, foreign substances, or the like into the undercover 4 through the deformable member 13 during traveling of the vehicle.

(2) In the vehicle lower structure of the present embodiment, as shown in FIGS. 6 to 8, each recess 14 includes the horizontal portion 14b and the vertical wall 14c, the horizontal portion 14b extending horizontally toward the vehicle rear side X2 and toward the inner side D2 of the corner portion 13c, the vertical wall 14c extending toward the vehicle lower side from the bottom side portion 14b3, which is the end portion of the horizontal portion 14b on the side toward the inner side D2 of the corner portion 13c, of the end portions of the horizontal portion 14b.

With such a configuration, when the movable panel 11 interferes with the road surface, at each recess 14 at the corner portion 13c of the deformable member 13, the horizontal portion 14b and the vertical wall 14c, which form the recess 14, are smoothly folded with the elevation of the movable panel 11. With such folding, the deformable member 13 is more smoothly deformed toward the inner side D2 of the corner portion 13c, thereby enhancing an effect of preventing damage to the undercover 4.

In addition, the horizontal portion 14b of the recess 14 extends toward the vehicle rear side X2 and hence, the horizontal portion 14b can straighten traveling air during traveling of the vehicle, thereby suppressing generation of turbulence at the recesses 14.

As a result, it is possible to enhances both the bendability of the corner portions 13c of the deformable member 13 and aerodynamic performance.

(3) In the vehicle lower structure of the present embodiment, as shown in FIG. 6, the bottom side portion 14b3, which is the end portion of the horizontal portion 14b on the side toward the inner side D2 of the corner portion 13c, of the end portions of the horizontal portion 14b, is formed to have a curved surface (radius of curvature R2 (>R1)) having a larger radius of curvature than the curved surface of the obtuse angle portion 14b1 (radius of curvature R1) at the end portion on the side toward the outer side D1 of the corner portion 13c.

With such a configuration, the area of the horizontal portion 14b can be increased, leading to enlargement of a portion that extends toward the vehicle rear side X2, thereby facilitating smooth airflow toward the rear side X2. As a result, aerodynamic performance is further enhanced.

(4) In the vehicle lower structure of the present embodiment, as shown in FIG. 6 and FIG. 8, the horizontal portion 14b has a triangular shape when viewed from the bottom. As components that form the triangular shape, the horizontal portion 14b includes the pair of oblique side portions 14b2 and the bottom side portion 14b3, the pair of oblique side portions 14b2 extending toward the vehicle rear side X2 and toward the inner side in the vehicle width direction Y to form the obtuse angle portion 14b1, the bottom side portion 14b3 extending in the direction Y1 toward the outer side in the vehicle width direction Y as the bottom side portion 14b3 extends toward the vehicle rear side X2.

With such a configuration, the horizontal portion 14b of the recess 14 has the above-mentioned triangular shape, thus having a simple shape. Therefore, it is possible to easily manufacture the undercover 4 that enhances both the bendability of the corner portions 13c of the deformable member 13 and aerodynamic performance, thereby enhancing productivity of the undercover 4.

### (Other features of the present embodiment)

Hereinafter, other features of the present embodiment will be described.

(5) In the vehicle lower structure of the present embodiment, as shown in FIGS. 2 to 10 and FIG. 12, the undercover 4 includes, as described above, the movable panel 11, the fixed frame 12, and the deformable member 13, which is deformable and couples the movable panel 11 to the fixed frame 12. The deformable member 13 is made of a material softer than the material of the movable panel 11, and is configured such that, when the movable panel 11 interferes with the road surface, the deformable member 13 is deformed, thereby allowing the movable panel 11 to move upward.

In such a configuration, the undercover 4 includes the movable panel 11, the fixed frame 12, and the soft deformable member 13, the fixed frame 12 being fixed to the bottom surface of the vehicle body 1, the soft deformable member 13 being deformable and coupling at least the front end portion 11c of the movable panel 11 to the fixed frame 12. Therefore, when the movable panel 11 of the undercover 4 comes into contact with an obstacle or a stepped portion protruding from the road surface during traveling of the vehicle, that is, when the movable panel 11 interferes with the road surface, as shown in FIG. 12, the soft deformable member 13 is deformed, thereby allowing the movable panel 11 to move upward and hence, it is possible to reduce a load received by the movable panel 11. Consequently, it is possible to prevent damage to the undercover 4 when interference with the road surface occurs.

Further, in the above-mentioned configuration, there is no concern of damage to the movable panel 11 and hence, the flat bottom portion 11a of the movable panel 11 can be disposed at a height close to the road surface. Therefore, during traveling of the vehicle, at the flat bottom portion 11a of the movable panel 11, negative pressure decreases toward the rear side from the front end, thereby facilitating airflow, and making traveling air less likely to impinge on the pair of front wheels 2 located on both sides of the movable panel 11 in the vehicle width direction. As a result, it is possible to reduce air resistance during traveling.

To enhance the effect of reducing air resistance, it is preferable that the movable panel 11 have a long length in the front-rear direction X, particularly, the bottom portion 11a have a long length. To achieve this, it is preferable that the front end portion 11c of the movable panel 11 be positioned as far forward as possible.

(6) In the vehicle lower structure of the present embodiment, the movable panel 11 is made of polypropylene. The deformable member 13 is made of elastomer.

In such a configuration, the deformable member 13 is made of elastomer, and thus is sufficiently softer than and has higher deformability than the movable panel 11 made of polypropylene. Therefore, when the movable panel 11 interferes with the road surface, the deformable member 13 is significantly deformed with a small load, thereby allowing the movable panel 11 to quickly and smoothly move upward. As a result, it is possible to reliably prevent damage to the undercover 4 when interference with the road surface occurs.

(7) In the vehicle lower structure of the present embodiment, as shown in FIG. 5 and FIG. 12, the deformable member 13 is disposed along the entire front end portion 11c of the movable panel 11 and along the side end portions 11e on both sides in the vehicle width direction within the range A, excluding the rear end portion 11d. The rear end portion 11d of the movable panel 11 is fixed to the fixed frame 12.

In such a configuration, the front end portion 11c of the movable panel 11 and both side end portions 11e within the range A, excluding the rear end portion 11d, are coupled to the fixed frame 12 via the deformable member 13, and the rear end portion 11d of the movable panel 11 is partially fixed to the fixed frame 12. Accordingly, the movable panel 11 is supported on the fixed frame 12 only at the rear end portion 11d in a cantilever state and hence, when interference with the road surface occurs, the front end portion 11c of the movable panel 11 can significantly swing in the up-down direction Z. As a result, it is possible to reliably prevent damage to the undercover 4 when interference with the road surface occurs.

In the present embodiment, although the movable panel 11, which is supported in a cantilever state, is made of a resin material, such as polypropylene, and is less likely to be deformed than elastomer, the movable panel 11 can be elastically deformed when interference with the road surface occurs. Therefore, although the movable panel 11 is elastically deformed (flexurally deformed) and swung upward when interference with the road surface occurs, the movable panel 11 returns to a normal horizontal state by the restoring force of the movable panel 11 itself when interference with the road surface is removed. The soft deformable member 13 is deformed following the upward and downward movement of the movable panel 11 (is deflected or pulled, thereby being deformed).

(8) In the vehicle lower structure of the present embodiment, it is preferable that the length of the deformable member 13 in cross section taken along the front-rear direction at the front portion 4a of the undercover 4 shown in FIG. 10 (that is, the length of the entire part extending in a curved shape from the front end portion 13d to the rear end portion 13e) be longer than the length of the deformable member 13 in cross section taken along the vehicle width direction at the side portion 4b of the undercover 4 shown in FIG. 9 (that is, the length of the entire part extending in a curved shape from the end portion 13f on the vehicle-width-direction outer side to the end portion 13g on the vehicle-width-direction inner side).

With such a configuration, the swing range in the up-down direction Z of the front end portion 11c of the movable panel 11 is increased and hence, it is possible to more reliably prevent damage to the undercover 4 when interference with the road surface occurs.

(9) In the vehicle lower structure of the present embodiment, as shown in FIG. 10 and FIG. 12, the deformable member 13 extends between the front end portion 11c of the movable panel 11 and the fixed frame 12 to have a length equal to or less than the height of the front end portion 13d of the deformable member 13 when the front end portion 11c of the movable panel 11 moves upward.

In such a configuration, the deformable member 13 extends between the front end portion 11c of the movable panel 11 and the fixed frame 12 to have the above-mentioned length and hence, when the movable panel 11 interferes with the road surface, and therefore the front end portion 11c of the movable panel 11 moves upward, the front end portion 11c of the movable panel 11 has a height equal to or less than the height of the front end portion 13d of the deformable member 13. Consequently, it is possible to eliminate concern that the front end portion 11c of the movable panel 11 moves upward beyond the front end portion 13d of the deformable member 13, thereby pulling and breaking the deformable member 13.

### (Modification)

In the above-mentioned embodiment, each recess 14 formed at the corner portion 13c of the deformable member 13 is configured to include the horizontal portion 14b having a triangular shape. When the horizontal portion 14b has a longer length in the vehicle front-rear direction X or the vehicle width direction Y to facilitate bending of the corner portion 13c, the corner portion 13c is more easily bent. The recess 14 may have a recess structure other than a triangular shape provided that the shape allows the corner portion 13c to be easily bent. The recess 14 may have various shapes provided that the shape serves as the bending starting point of the corner portion 13c. For example, the recess 14 may have a shape of a semicircular dimple or a bellows shape.

### [Reference Signs List]

- 1: vehicle body
- 2: front wheel
- 4: undercover
- 4a: front portion
- 4b: side portion
- 11: movable panel
- 12: fixed frame
- 13: deformable member
- 13a: front portion
- 13b: side portion
- 13c: corner portion
- 13d: front end portion
- 13e: rear end portion
- 13f: end portion on vehicle-width-direction outer side
- 13g: end portion on vehicle-width-direction inner side
- 14: recess
- 14a: first inclined surface
- 14b: horizontal portion
- 14b1: obtuse angle portion
- 14b2: oblique side portion
- 14b3: bottom side portion
- 14c: vertical wall
- 14d: second inclined surface

## Claims

1. A vehicle lower structure comprising an undercover (4) that is configured to cover a bottom surface of a vehicle body (1) of a vehicle within a range on a front side (X1) of a pair of front wheels (2) and between the pair of front wheels (2), the vehicle lower structure being **characterized in that**
the undercover includes a movable panel (11), a fixed frame (12), and a deformable member (13), the movable panel (11) being movable in an up-down direction, the fixed frame (12) being disposed, in a vehicle height direction, above the movable panel (11), and being fixed to the bottom surface of the vehicle body (1), the deformable member (13) being deformable and coupling the movable panel (11) to the fixed frame (12),
the deformable member (13) is made of a material softer than a material of the movable panel (11), and is deformed when the movable panel interferes with a road surface,
the deformable member (13) includes a front portion (13a) and a pair of side portions (13b), the front portion (13a) extending in a vehicle width direction (Y) on a front side of the undercover (4), the pair of side portions (13b) extending toward a vehicle rear side (X2) from both end portions of the front portion (13a), and
corner portions (13c) are formed by the front portion (13a) and the pair of side portions (13b) of the deformable member (13), and a corner portion (13c) of the corner portions (13c) has a recess (14) that is recessed toward an inner side of the corner portion (13c).

2. The vehicle lower structure according to claim 1, the vehicle lower structure being **characterized in that**
the recess (14) includes a horizontal portion (14b) and a vertical wall (14c), the horizontal portion (14b) extending horizontally toward the vehicle rear side (X2)and toward the inner side (D2) of the corner portion (13c), the vertical wall (14c) extending toward a vehicle lower side from an end portion of the horizontal portion (14b) on a side toward the inner side (D2) of the corner portion (13c), of end portions of the horizontal portion (14b).

3. The vehicle lower structure according to claim 2, **characterized in that** the recess (14) further includes a first inclined surface (14a) extending from the fixed frame (12) to the horizontal portion (14b), and a second inclined surface (14d) extending from the vertical wall (14c) to the movable panel (11).

4. The vehicle lower structure according to claim 2 or 3, the vehicle lower structure being **characterized in that**
of the end portions of the horizontal portion (14b), the end portion on the side toward the inner side (D2) of the corner portion (13c) is formed to have a curved surface having a larger radius of curvature (R2) than a curved surface of an end portion on a side toward an outer side (D1) of the corner portion (13c).

5. The vehicle lower structure according to any of claims 2 to 4, the vehicle lower structure being **characterized in that**
the horizontal portion (14b) has a triangular shape when viewed from a bottom, and
as components that form the triangular shape, the horizontal portion (14b) includes a pair of oblique side portions (14b2) and a bottom side portion (14b3), the pair of oblique side portions (14b2) extending toward the vehicle rear side (X2) and toward a vehicle-width-direction inner side to form an obtuse angle portion (14b1), the bottom side portion (14b3) extending in a direction toward a vehicle-width-direction outer side (Y1) as the bottom side portion (14b3) extends toward the vehicle rear side (X2).

6. The vehicle lower structure according to claim 5, **characterized in that** the obtuse angle portion (14b1) has an angle larger than 90 degrees.

7. The vehicle lower structure according to any of the preceding claims, **characterized in that** the deformable member (13) is made of elastomer and the movable panel (11) is made of polypropylene, wherein preferably the undercover (4) is integrally formed by two-color molding.

8. The vehicle lower structure according to any one of the preceding claims, **characterized in that** a rear end portion (11d) of the movable panel (11) is fixed to the fixed frame (12), such that the movable panel (11) is supported in a cantilever state.

9. The vehicle lower structure according to any of the preceding claims, **characterized in that** the deformable member (13) is disposed along a front end portion (11c) and side end portions (11e) of the movable panel (11), excluding the rear end portion (11d).

10. The vehicle lower structure according to any one of the preceding claims, **characterized in that** the movable panel (11) includes a flat bottom portion (11a) and a front inclined surface (11b) that is inclined upward as the front inclined surface (11b) extends toward a vehicle front side (X1).

11. The vehicle lower structure according to any one of the preceding claims, **characterized in that** a length of the deformable member (13) in a cross-section taken along a front-rear direction (X) at the front portion (4a) of the undercover (4) is longer than a length of the deformable member (13) in a cross-section taken along the vehicle width direction (Y) at a side portion (4b) of the undercover (4).

12. A vehicle comprising a vehicle lower structure according to any of the preceding claims.

13. The vehicle according to claim 12, **characterized in that**
the fixed frame (12) is fixed to a bumper (3) and a suspension cross member (20) of the vehicle body (1) of the vehicle.
